# EUROPÄISCHE PATENTANMELDUNG

(11) **EP 1 459 702 A2**
(43) Veröffentlichungstag der Anmeldung: **22.09.2004**
(21) Anmeldenummer: 04006782.9
(22) Anmeldetag: 22.03.2004
(51) Int. Cl.: A61C 9/00

(54) **Datenbank, Zahnmodell und Zahnersatzteil, aufgebaut aus digitalisierten Abbildungen realer Zähne**

(30) Priorität: 21.03.2003 DE 10312848
(71) Anmelder: Sirona Dental Systems GmbH, 64625 Bensheim (DE)
(72) Erfinder: Orth, Ulrich, 64686 Lauertal (DE); Teckentrup, Steffen, 64646 Heppenheim (DE); Wedler, Volker, 69493 Hirschberg (DE); Willers, Ulf, 64295 Darmstadt (DE)
(74) Vertreter: Sommer, Peter

(57) **Zusammenfassung**

Die Erfindung betrifft eine Datenbank zur Speicherung von Daten, wobei die Datenbank Zahndaten real existierender Zähne in digitalisierter Form abbildet und diese digitalisierte Form auch allgemeingültige gebissspezifische bzw. zahnspezifische Merkmale bzw. strukturelle Eigenschaften, wie geschlechtsspezifische- und/oder zahnfamilienspezifische- und/oder biographiespezifische- und/oder individualspezifische- mit/ohne abnorme Kennzeichen umfasst.

Die Erfindung betrifft weiterhin ein Verfahren zur Konzeption eines Zahnmodells dessen äußere Gestalt und/oder innerer Aufbau mit Hilfe von Daten ausgestaltet und/oder aufgebaut ist, die geschlechtsspezifisch und/oder zahnfamilienspezifisch und/oder biographiespezifisch und/oder individuenspezifisch mit/ohne Abnormitäten sind wobei der Bediener und/oder der Auftraggeber mit Hilfe eines elektronischen Datenverarbeitungssystems auf Datenbank/en zugreift, diese Daten auf einer Darstellungsvorrichtung zu einem Bild eines Zahnmodells zusammengefügt werden und wobei mit Hilfe dieses Bilds eines Zahnmodells mit Hilfe der Ein- und Ausgabevorrichtungen der elektronischen Datenverarbeitung dessen dargestellte Gestalt veränderbar ist.

## Beschreibung

Die Erfindung betrifft eine Datenbank, ein Zahnmodell und ein Zahnersatzteil, die mit Hilfe digitalisierter Abbildungen realer Zähne aufgebaut sind.

### Stand der Technik

Der Stand der Technik umfasst Sammlungen einzelner (realer) Zähne eines oder mehrerer Gebisse, oder vom Zahntechniker mehr oder weniger individuell hergestellte Modelle von Zähnen für ein Gebiss. Nachteil dieser Sammlungen sind, dass sie nicht in Datensätzen vorliegen, die in der EDV abspeicherbar sind.

Darüber hinaus existieren Zahnmodelle als einzelne Exemplare für jede Position im Kiefer. Diese dienen im weitesten Sinn zu Anschauungs- und Schulungszwecken und helfen dentalbezogene Fragestellungen plastisch und praktisch zu verdeutlichen. Derartige Modelle sind über den einschlägigen Handel beziehbar.

Darüber hinaus existieren von diversen Herstellern EDV-Programme, welche einzelne Zähne oder zahnspezifische Charakteristika, wie Kauflächen oder Zahnkanten o.ä. abbilden und am Computerbildschirm darstellen.

Außerdem sind seit jeher Bibliotheken von Zähnen und deren Daten sowohl als physisches Modell als auch in digitalisierter Form bekannt. Nachteilig ist, dass nur standardisierte (Gips)Zähne vorhanden sind. Standardisierte Zähne aus anderem Material werden auch zum Einbau in Prothesen verwandt.

Darüber hinaus gibt es Zahnbibliotheken, die als Nebenprodukt eines Bearbeitungsprozesses und situativ für die Erstellung eines speziellen Produkts erstellt werden. Weiterhin sind Zahnbibliotheken bekannt, welche eine sehr begrenzte Zahl repräsentativer Zahn- oder Kiefermodelle in codierter Form umfassen, die in erster Linie als Anschauungsobjekte z.B. für Schulungszwecke dienen. Nachteil solcher Zahnbibliotheken ist, dass sie keine Zahn- oder Gebissdaten einer wirklich großen Anzahl von real existierenden Personen umfassen. Allgemein zeichnen sich diese Bibliotheken dadurch aus, dass ihre Eigenschaften nicht systematisch kategorisiert und/oder katalogisiert sind.

Darüber hinaus ist eine Software von Nobel Biocare "Procera™ System" zur Konstruktion von Kronenkappen auf der Basis von extern zugelieferten und nicht aus einer eigenen Datenbank stammenden Daten bekannt. Nachteilig an dieser Software ist, dass mit jener Software keine Darstellung der Kaufläche möglich ist.

Darüber hinaus gibt es auf dem Markt diverse Programme für Kieferorthopädie, wie z.B. in der WO 02/102270 dargestellt, die in erster Linie zur Diagnose eingesetzt werden und das Verhältnis von Ober- zu Unterkiefer feststellen. Aufgabe derartiger Programme ist allgemein die Darstellung von Zahnbewegungen im Kiefer und deren Planung. Jene Programme sind erfahrungsgemäß nicht geeignet, die Zahndarstellungen selbst in ihrer dargestellten Erscheinung plastisch zu verändern.

Darüber hinaus sind Computerprogramme bekannt, bei welchen Zähne durch zahn-typische Linien wie beispielsweise Abbisskanten oder Kaulinien o.ä. repräsentiert werden, wobei diese Linien auch gespeichert werden können. Aufgabe dieser und anderer hierfür notwendiger Linien ist es, einen Zahn so weit zu repräsentieren, dass anhand diese Linien eine Zahnoberfläche mit Hilfe mathematischer Verfahren, wie z.B. durch Interpolation aufgebaut wird. Nachteil dieser Computerprogramme ist, dass ein derart aufgebauter Zahn theoretisch erst bei einer ins grenzwertig unendlich gehenden Datenbasis in Verbindung mit einer grenzwertig unendlichen Rechnerkapazität einen Zahn virtuell mit Hilfe mathematischer Methoden so darstellen kann, wie er in der Realität vorkommt.

Weiterhin ist ein Softwareprogramm bekannt, das auf die Anmeldung FR-2 735 679 bzw. WO 02/076326 zurückgeht und unter dem Namen Cynovad Pro 50™ auf dem Markt ist. Es betrifft ein Verfahren zum Aufbereiten dentaler Restaurationen, das nur vorsieht, einzelne Konstruktionsergebnisse abzuspeichern ohne diese jedoch in einer Datenbank zu speichern. Außerdem können aufgrund der Linienbasierung der Darstellung der Software keine der Realität entsprechenden Oberflächen dargestellt werden.

Im Folgenden wird für diese Anmeldung unter "Zahnbibliothek" bzw. "Zahndatenbank" daher eine Datenbank / Bibliothek verstanden, welche eine Anzahl an digitalisierten Zahnformen real existierender Zähne inklusive der Zuordnung zu den Inhabern des jeweiligen Zahns und mit oder Strukturelementen des Zahns umfasst.

An den Nachteilen des Stands der Technik setzt die Aufgabe der Erfindung an, ein Zahnmodell zu schaffen, welches die geschilderten Nachteile nicht aufweist, weil es einen verbesserten Realitätsbezug hat.

### Darstellung der Erfindung

Diese Aufgabe wird erfindungemäß durch die Merkmale der unabhängigen Ansprüche gelöst, wobei zweckmäßige Weiterbildungen durch die jeweiligen Unteransprüche gekennzeichnet sind.

Gemäß der Erfindung wird eine Datenbank zur Speicherung von Daten, wobei die Datenbank Zahndaten mit allgemeingültige gebissspezifischen und/oder allgemeingültige zahnspezifischen Merkmalen umfaßt, dadurch gekennzeichnet, dass die Zahndaten real existierender Zähne in digitalisierter Form abbilden und diese digitalisierte Form auch allgemeingültige gebissspezifische bzw. zahnspezifische Merkmale bzw. strukturelle Eigenschaften, wie geschlechtsspezifischeund/oder zahnfamilienspezifische- und/oder biographiespezifische- und/oder individualspezifische- mit/ohne abnorme Kennzeichen umfasst. Diese digitalisierten Abbilder realer Zähne können auf vielfache Weise gewonnen werden. Denkbar ist beispielsweise ein dreidimensionaler Scanprozeß im Mund des Informationsgebers, oder auch ein Abdruck eines Zahns, welcher dann ausgegossen wird und als Scanmodell zur Verfügung stünde.

Ein Vorteil von Zahndaten real existierender Zähne in digitalisierter Form ist, dass sie als Zähne eines Individuums in digitalisierter Form abgelegt werden können, um sie zu einem späteren Zeitpunkt z.B. als Anschauungsobjekte wieder zu verwenden, wenn der betreffende reale Zahn ggf. verloren sein sollte. Auf diesem Weg kann ein entsprechender Repräsentant mit all den genau ihn kennzeichnenden morphologischen Merkmalen dargestellt werden. Hierdurch wird das bisher notwendige ersatzweise Arbeiten mit Konstruktionslinien fakultativ.

Ein weiterer Vorteil von Zahndaten real existierender Zähne ist, dass wenn von einem Individuum zuvor keine Daten eingespeichert worden sein sollten, ein möglichst präziser Ersatz mit all seinen in der Realität existierenden Details als virtueller Ersatz zur Verfügung gestellt werden kann. Im Gegensatz zu einem mathematisch interpolierten Repräsentanten kann so beispielsweise ein von den Abmaßen möglichst passender Repräsentant herausgefiltert werden, der ebenfalls die gleiche Höckerzahl hat, wie vom Auftraggeber gewünscht.

Unter "strukturellen Eigenschaften" werden hier Eigenschaften verstanden, die bei jedem Gebiß und bei jedem Zahn z.B. konstitutiv vorhanden sind, wie die geschlechtsspezifische und/oder zahnfamilienspezifische und/oder biographiespezifische- und/oder individualspezifische Unterscheidbarkeit mit/ohne diverse abnorme Kennzeichen. Hierbei handelt es sich um die erste und gröbste Möglichkeit der Kennzeichnung, bzw. Sortierung der Daten mit Hilfe von Strukturmerkmalen, die zwangsweise einem jeden Gebiß und/oder Zahn anhaften. Darüber hinaus sind auch Sortierungen mit Hilfe der Äquatorlinie, der Randleiste oder der Fissur und eines ggf. vorhandenen Präparationsrands denkbar.

Die geschlechtsspezifische Sortierung der Datenbank trägt dem Umstand Rechnung, dass Zähnen von Personen ein und des selben Geschlechts die selben Strukturmerkmale aufweisen, dass also Zähne auf der selben Position bei Männern und Frauen eine unterschiedliche Gestalt aufweisen; darüber hinaus trägt die zahnfamilienspezifische Sortierung der Datenbank u.a. dem Umstand Rechnung, dass Zähne auf der selben Position innerhalb der selben Zahnfamilie die selben Strukturmerkmale aufweisen, je nach dem, ob der Inhaber des Gebisses z.B. einer asiatischen, afrikanischen oder europäischen Rasse angehört. Eine weitergehende feinere Sortierung der zahnfamilienspezifischen Merkmale wäre beispielsweise mit Hilfe der Höckerzahl, der Äquatorlinie, der Randleiste oder der Fissur bzw. einer U / V-Form eines Unterkieferzahns bzw. einer Oval- Dreiecks- oder Quadratform eines Oberkieferzahns, eines ggf. vorhandenen Präparationsrands o.ä. möglich. Darüber hinaus kann mit Hilfe einer biographiespezifischen Sortierung der Datenbank dem Umstand Rechnung getragen werden, dass bei dem Gebiß ein und der selben Person gewisse Strukturmerkmale während seines gesamten Lebens erhalten bleiben, so können beispielsweise in jungen Jahren aufgenommene Daten zu einem späteren Zeitpunkt wieder verwandt werden, oder es kann ein Zahn dargestellt werden, der, wie der Rest des Gebisses, aufgrund der Bevorzugung einer gewissen Nahrung einen gebissspezifischen Abnutzungsgrad aufweist; außerdem kann mit Hilfe einer individualspezifischen Sortierung der Datenbank dem Umstand Rechnung getragen werden, dass innerhalb des Gebisses ein und der selben Person gewisse Strukturmerkmale kontinuierlich vorhanden sind, wie beispielsweise der Umstand, dass kontralaterale Zähne eine sehr hohe Ähnlichkeit aufweisen. Auf diesem Wege kann, wenn beispielsweise in jungen Jahren keine Daten aufgenommen wurden der gegenüberliegende Zahn auf der anderen Seite, beispielsweise mit Hilfe einer Spiegelung als Datenquelle Verwendung finden, wenn ein anderer Zahn verloren gehen sollte und in jungen Jahren kein Abbild gemacht worden war; darüber hinaus kann mit Hilfe einer Sortierung an Hand von Abnormitäten dem Umstand Rechnung getragen werden, dass gewisse Abnormitäten, z.B. in der Gestalt des Zahns, oder das Fehlen des 2ers erfahrungsgemäß mehrfach oder kontinuierlich in einem Gebiß vorhanden sind. Hierdurch kann für den Bediener der Datenbank eine optimale Ausgangsbasis für Anschauungs- und Schulungszwecke geschaffen werden, von der aus weitere Vorhaben effizient planbar sind.

Ein weiterer Vorteil einer derartigen Datenbank ist, dass auf Basis einer derart optimierten Ausgangssituation die Gestalt eines daraus aufgebauten Zahnmodells individuell und situativ geändert und diese Änderungen sofort plastisch dargestellt werden können. Hierdurch ist für den Auftraggeber ein unmittelbarer Anschauungs- und Schulungserfolg gegeben, da er direkt erfährt, welche praktischen Folgen die Umsetzung seiner individuellen Vorstellungen mit sich bringt. Dies ist insbesondere in Kulturräumen von Vorteil, in welchen das ästhetische Erscheinungsbild einen hohen Stellenwert besitzt. So gilt in Indien eine kontinuierliche Schnittkante der jeweiligen vier Schneidezähne als Schönheitssymbol. In den USA genießt die ästhetische Erscheinung der Frontzähne in Farbe und Gestalt (z.B. auch der Diasthema) eine hohe Aufmerksamkeit. Denkbar ist darüber hinaus auch die Darstellung einer künstlerischen Gestaltung des individuellen real existierenden Zahns mit z.B. Farb-, Gravur- oder Schmuckelementen, wie sie in der Jugendkultur zunehmend z.B. in For eines kleinen Brillianten oder eines Piercings in Erscheinung tritt.

Somit hat der Aufraggeber einen direkten Zugang zu Daten mit hohem Realitätsbezug und erhält ein ggf. nach seinen Vorstellungen optimiertes Referenzmodell, mit dessen Hilfe er dann einen geeigneten Künstler auswählen kann, der dem realen Zahn dann die zuvor gewählte künstlerische Gestalt zu verleihen in der Lage ist, oder einen Arzt, der dann eine Diagnose einleitet, auf deren Basis einen Behandlungsplan zur Erreichung des vom Auftraggeber zuvor definierten und mit Hilfe eines Zahnmodells plastisch darstellbaren Behandlungsziels erstellt. Ein großer Vorteil ist in diesem Zusammenhang, dass der Auftraggeber bereits vor jeglicher Diagnose und Behandlung eine von den Interessen eines Arztes unabhängige Expertenmeinung einholen kann und sie in Gestalt eines Zahnmodells als Referenzobjekt plastisch vor sich hat. Dieses Referenzmodell kann dann im Vorfeld einer Diagnose oder Behandlung die Entscheidung erleichtern, ob überhaupt eine Behandlung begonnen werden soll und sie kann während einer begonnenen Behandlung als Benchmark zur Steuerung des Behandlungserfolgs Verwendung finden. Der Auftraggeber ist somit von der Meinung eines Arztes zunächst unabhängig und er kann eine ab dann beginnende Diagnose und/oder Behandlung aktiv beeinflussen und ihren Verlauf mit steuern.

Unter einem "idealen Zahn" ist nach diesem Verständnis also ein Zahn zu verstehen, der bei vorgegebenen Informationen des Auftraggebers aus denjenigen Daten der Datenbank aufgebaut und/oder ausgestaltet wird, die innerhalb der gegebenen Randbedingungen idealtypisch sind (objektiv ideal) oder die nach den individuellen Vorstellungen des Auftraggebers ausgewählt wurden (subjektiv ideal), oder die objektiv ideal sind und zusätzlich vom Auftraggeber noch nach subjektiven Kriterien abgeändert wurden.

Vorteilhafterweise sind diese Daten darüber hinaus zwei weiteren Datengruppen zuordenbar, den Daten des Gebisses und den Daten des Zahns, damit die Datenbank somit sowohl mit Gebissstrukturen, als auch mit Zahnstrukturen oder mit beidem aufgebaut werden kann.

Eine weitere vorteilhafte gebissspezifische Sortierung kann mit Hilfe der Anzahl der Zähne, deren Position zueinander, dem Charakter der Gestalt der durch sie ausgebildeten Kaufläche, der Gestalt der Wilsonkurve bzw. der Gestalt der von Speeschen Kurve, Zahnbogenformen, erster praemolar Messpunkt von 4 zu 4, zweiter praemolar Messpunkt von 6 zu 6 (6-Jahrmolan), Kronengröße der Schneidezähne, und durch typische Abnormitäten der Zähne im Gebiß bzw. im Kiefer erfolgen. Gebissspezifische Strukturen sind daher besonders aussagestark, wenn es darum geht, das Zusammenwirken der Zähne untereinander zu repräsentieren und ihre Funktion im Verband darzustellen.

Auf der Basis der vorhandenen gebissspezifischen Struktur der Datenbank kann dadurch eine konkretisierte gebissspezifische Struktur aus einer beliebigen Anzahl individueller gebissspezifischer Strukturen von einzelnen Gebissen ermittelt werden, indem diejenige Anzahl an Daten und derjenige Typ an Daten aus der Datenbank ausgewählt wird, die dem Bediener am passendsten erscheint. Durch diesen ersten Filterschritt wird die gesamte Anzahl zur Verfügung stehender Daten auf diejenige relevante kleinere Menge reduziert, mit der dann konkret weitergearbeitet werden kann; es wird also eine repräsentative Auswahl an Daten erstellt.

Aus dieser Anzahl prinzipiell verwendbarer Daten wählt sich der Bediener dann direkt oder in einem weiteren zweiten Konkretisierungsschritt mindestens einen in der Datenbank vorhandenen und zu seiner aktuellen Situation passenden Datensatz. Durch diesen zweifachen Filterprozeß kann vorteilhaft sichergestellt werden, dass der passendste Datensatz auf die konkrete Fragestellung aus der Datenbank herausgefiltert werden kann.

Analoge Vorteile ergeben sich aus einer Anwendung dieses Filterprozesses auf die zahnspezifischen Daten, wobei die zahnspezifischen Daten vorteilhafterweise durch die Position des Einzelzahns im Gebiß, der Gestalt des Einzelzahns z.B. in U / V-Form, Oval- Dreiecks- oder Rechteckform, der Passung der Zahnform zur Schädelform, dem Charakter des Einzelzahns z.B. Äquatorlinie, Randleiste, Fissurenform (H-Form, bzw. länglich) oder Höckerzahl, Tuberculum carabelli, ggf. Präparationsrand, Zahnfarbe, und vergleichbare Merkmale, sowie typischen Abnormitäten repräsentiert werden.

Werden gebissspezifische und zahnspezifische Merkmale kombiniert, so erhöht sich die Wahrscheinlichkeit diejenige Gebiß- und Zahnsituation in der Datenbank zu finden, die der Ausgangsfragestellung am Nächsten kommt.

Ein weiterer Vorteil ergibt sich, wenn ein Zahnmodell aus Daten einer Datenbank aufgebaut wurde, welche nicht nur die Daten von Zähnen umfasst, sondern auch dentalspezifische Konstruktionsmerkmale, die jeweils auf den Zahn / die Zähne individuell oder als repräsentative Zahngruppe (z.B. der Sechser weiblicher Asiatinnen) bezogen sind. So kann beispielsweise eine ideale Schneidkante eines Frontzahns einer weiblichen Asiatin auf Basis einer Vielzahl solcher Zähne abgespeichert und somit auch dargestellt werden.

Von besonderem Vorteil ist es, wenn der Bediener der Datenbank (zahnspezifische und/oder konstruktionsspezifische) Daten direkt vor Ort auf einer eigenen EDV zur Verfügung hat, wodurch Reaktions- und damit Bearbeitungszeiten minimiert werden. Darüber hinaus ergibt sich jedoch auch ein Vorteil, zum Beispiel für die Information eines Auftraggebers aus einem anderen Teil der Welt, wenn der Bediener der Datenbank auf eine andere, am Ort gerade nicht verfügbare Datenbank mit den dort typischen Datensätzen zugreifen kann. Auf diesem Weg kann der Bediener sowohl den typischen Wünschen ungewöhnlicher Auftraggeber, als auch den ungewöhnlichen Wünschen sonst eher typischer Auftraggeber entsprechen. Derartige Verbindungen zu Datenbanken und zwischen Datenbanken sind durch die diversen Möglichkeiten der Telekommunikation einfach umsetzbar.

Eine besondere Erleichterung ergibt sich bei dem Aufbau eines entsprechenden idealen Zahns, wenn die Datenbank über mindestens eine Eingabeeinheit, wie beispielsweise Tastatur, Maus, Joystick, Pointer etc. und/oder mindestens einer Wiedergabeeinheit, wie Drucker, Bildschirm ausgestattet ist. Hierdurch kann eine direkte Interaktion vom Datenbankbediener mit den Daten bzw. ein direkte Interaktion vom Auftraggeber mit den Daten stattfinden, indem er beispielsweise direkt auf die Datenbank zugreift, aus ihr Daten abruft, die dann an der Darstellungseinheit wiedergegeben werden. Hierdurch ist der Bediener bzw. Auftraggeber auch unabhängig von Filtern direkt in der Lage, aktiv auf die Datenbank zuzugreifen und so aktiv nach Daten zu suchen. Über diese Ein- Ausgabeeinheiten kann der Bediener auch direkt auf die Datenbank zugreifen.

Ein weiterer Vorteil ergibt sich, wenn die Interaktion zwischen dem Bediener und/oder Auftraggeber mit den Eingabeeinheiten und/oder Darstellungseinheiten und Datenbanken von mindestens einem Computerprogramm unterstützt werden. Ein solches Programm kann beispielsweise die Auswahl der relevanten Daten mit Hilfe von Filtern erleichtern; es kann weiterhin beispielsweise die Darstellung mit Hilfe von Farben oder dreidimensionalen Darstellungen plastischer und realitätsnäher gestalten; es kann weiterhin die Zuordnung ausgewählter Daten zu einem Auftraggeber ermöglichen; außerdem können beispielsweise an beliebiger Stelle Schnitte gelegt werden, darüber hinaus ist auch eine Zugangssperre bzw. eine gestufter Zugang für diverser Benutzergruppen möglich; außerdem kann die Interaktionstiefe mit dem Programm beispielsweise von der Art, wer darf welche Daten eingeben/abrufen situativ einstellbar und nicht zuletzt ist hierdurch auch die Möglichkeit der Kombination von diversen Datensätzen möglich sowie eine Darstellung einer Datensatzgruppe, die sich durch die Zusammenführung mindestens zweier Datensätze zu einem neuen gemeinsamen Datensatz ergibt.

Eine gängige Arbeitserleichterung stellt die Entnahme von Daten mit Hilfe festgelegter Routinen eines EDV-Programms aus dem Datenpool dar, beispielsweise für den Wunsch, einen repräsentativen Zahn eines männlichen 35-jährigen Asiaten aus einem bestimmten Land heraus zu filtern. Darüber hinaus wäre es auch vorstellbar, unabhängig der Zuordnung der bisher erwähnten Gruppen, einen idealen Zahn zu gestalten, der gewisse geometrische Daten umfasst, die dem Bediener und/oder Auftraggeber wichtig erscheinen.

Ein weiterer Vorteil ergibt sich, wenn der Austausch von Daten zwischen den Bedien- bzw. Darstellungsterminals nur mit Hilfe eines Bezahlsystems möglich ist. Auf diesem Wege können Bemühungen von Datenbankbetreibern belohnt werden, ihre Daten umfangreich aufzubauen und aktuell zu halten, sowie sie dem Wohle Dritter zur Verfügung zu stellen. Derartige Bezahlsysteme sind sowohl zwischen zwei Nutzern denkbar, als auch zwischen über einen zentralen Bezahlservice.

Mit Hilfe eines Computerprogramms können ausgewählte Datensätze realer Zähne auch zu einem einzigen neuen Datensatz eines virtuellen nicht realen Zahns synthetisiert werden. Hierdurch können die vorhandenen Datensätze zur Konstitution neuer Datensätze untereinander verknüpft werden, wobei der Bediener die Verknüpfungsregeln vorgeben kann.

Ein weiterer Vorteil eines Computerprogramms wäre beispielsweise einen dargestellten, gegebenenfalls bereits nach gewissen Kriterien vorselektierten Zahn mit Hilfe von Computerprogrammen weiter zu bearbeiten, indem beispielsweise die Gestalt der Bisskanten entsprechend den Vorstellungen des Aufraggebers am Bildschirm etwas verändert und/oder verändert wird, oder die gesamte Gestalt etwas runder oder spitzer gestaltet wird, oder beispielsweise eine Vertiefung etwas flacher ausgeführt wird. Programme mit derartigen Darstellungsmöglichkeiten sind in der Lage, basierend auf vorgegebenen Daten, die Wünsche der Bediener individuell umzusetzen und den idealen Zahn so weiter aufund auszubauen, wobei das jeweilige Ergebnis direkt am Bildschirm zur Kontrolle des Bedieners und/oder Auftraggebers dargestellt wird.

Ein weiterer großer Vorteil ergibt sich, wenn die Darstellung des ideal aufgebauten und gestalteten Zahns zum Beispiel mit Hilfe von Computerprogrammen 3-dimensional dargestellt- und in allen Raumachsen bewegt werden kann. Eine derartige dreidimensionale Darstellung wirkt besonders plastisch, wenn sie auf 3D-Bildschirmen geschieht und ist insbesondere in der ästhetischen Beratung von großem Vorteil.

Ein weiterer Vorteil ergibt sich, wenn ein Datensatz dazu geeignet ist, ein komplettes Zahnmodell darzustellen und nicht nur einen Teil eines möglichen Zahns, oder einen einzelnen Zahn. Ein solches Zahnmodell kann auch eine Gruppe von Zähnen repräsentieren, wie beispielsweise eine Brücke, oder eine ganze Zahnreihe. Statt einer Gruppe von Zähnen kann aber auch beispielsweise auch lediglich die Kaufläche dargestellt werden, um hierdurch beispielsweise das Zusammenwirken einzelner Zähne im gesamten Kauapparat darzustellen.

Vorteile eines Zahnmodells, dessen äußere/innere Oberfläche und/oder innerer Aufbau mit Hilfe von Daten bestimmt ist, die aus einer Datenbank und/oder mehrerer Datenbanken entnommen werden und an einem Ausgabegerät dargestellt werden sind, dass bei dessen Aufbau bzw. Ausgestaltung geschlechtsspezifische und/oder zahnfamilienspezifische und/oder biographiespezifische und/oder individualspezifische Merkmale mit/ohne Abnormitäten einzeln, oder in Kombination berücksichtigt werden können. Auf diesem Wege können aus der großen Menge der aus Datensätzen aufgebauten Zahnmodelle die relevant erscheinenden effizient, z.B. durch Anschauung am Bildschirm ausgewählt werden.

Ein weiterer Vorteil ergibt sich, wenn das Zahnmodell so aufgebaut und/oder ausgestaltet wird, dass es nicht nur Anschauungs- und Schulungszwecken dient, sondern auch der fachlichen Information und/oder Meinungsbildung, indem beispielsweise der interne Aufbau des Zahnmodells dem internen Aufbaus eines idealen Zahns entspricht.

Darüber hinaus ergibt sich ein weiterer Vorteil, wenn nicht nur einzelne Zähne oder Zahngruppen oder Kauflächen dargestellt werden, sondern auch das Zusammenwirken beim Auftreffen gegenüberliegender Zähne/Kauflächen, um hierdurch ihre Interaktion plastisch auch dreidimensional darstellen zu können.

Ein weiterer Vorteil ergibt sich, wenn das dargestellte Zahnmodell z.B. mit Hilfe eines Computerprogramms in Form eines Einzelzahns und/oder Zahngruppe und/oder Zahnoberfläche und/oder das Zusammenwirken gegenüberliegender Kauleisten nicht nur am Bildschirm, bzw. Drucker o.ä., sondern auch just in time als 3-dimensionales Modell hergestellt wird.

Ein weiterer Vorteil ergibt sich, wenn ein Bediener das auf Daten aus der Datenbank synthetisierte Zahnmodell z.B. mit Hilfe von Computerprogrammen, wie z.B. CAD-Programmen den eigenen Vorstellungen folgend weiter bearbeitet und so individualisiert. Dies kann auch interaktiv z.B. mit Hilfe eines Dialogprogramms oder Expertensystems geschehen.

Besondere Vorteile bietet ein Verfahren zur Konzeption eines Zahnmodells dessen äußere Gestalt und/oder innerer Aufbau mit Hilfe von Daten ausgestaltet und/oder aufgebaut ist, die geschlechtsspezifisch und/oder rassischspezifisch und/oder biographiespezifisch und/oder individuenspezifisch mit/ohne Abnormitäten sind wenn der Bediener und/oder der Auftraggeber mit Hilfe eines elektronischen Datenverarbeitungssystems über dessen Eingabevorrichtung wie beispielsweise Tastatur und/oder Maus und dessen Anzeigenvorrichtung wie beispielsweise Monitor und oder Drucker auf die Datenbank zugreift, die entsprechende zahnspezifischen Daten enthält, diese Daten auf der Darstellungsvorrichtung als Bild eines Zahnmodells zusammenfügt und das zusammengefügte und dargestellte Zahnmodell, dessen Gestalt nach Maßgabe des Bedieners und/oder Auftraggebers individuell mit Hilfe der Ein- und Ausgabevorrichtungen und unterstützender Computerprogramme bearbeitet werden kann.

Einen besonderen Vorteil bietet diese Verfahren, wenn eine 3-dimensionale Darstellung des Zahnmodells möglicht ist.

Ein weiterer Vorteil ergibt sich, wenn das dargestellte Zahnmodell beispielsweise just in time als 3-dimensionales Modell hergestellt wird.

Ein weiterer Vorteil ergibt sich, wenn ein derartig hergestelltes Modell nicht nur zu Lehr- und Schulungszwecken, im Vorfeld einer künstlerischen Gestaltung oder einer medizinischen Diagnose, sondern auch für eine aktuelle Situation eines Auftraggebers geeignet ist.

Vorteilhafterweise ist das 3-dimensionale Modell ein zahnmedizinischer Passkörper, der mit einer aktuell bestehenden oder geplanten Situation eines Auftraggebers korrespondiert z.B. ein Zahnersatzteil ist.

### Kurzbeschreibung der Zeichnung

In der Zeichnung sind Ausführungsbeispiele der Erfindung dargestellt, es zeigt:
- Fig. 1: ein Blockdiagramm zum Aufbau der Zugriffstiefe in die Datenbank;
- Fig. 2: ein Blockdiagramm Ablauf des Zugriffs auf die Datenbank;
- Fig. 3: ein Flußdiagramm betreffend die Aufnahme eines individuellen Zahns;
- Fig. 4: ein Flußdiagramm betreffend die Aufnahme der Präparation;
- Fig. 5: mehrere Zähne einer Zahnfamilie in einer Kaufläche;
- Fig. 6: eine mögliche Konstruktionslinien, welche gemeinsam sam mit den Daten eines Zahns abgespeichert werden können;
- Fig. 7: das Zusammenwirken der Datenbank mit dem Bediener und/oder Auftraggeber;
- Fig. 8a: die den Zustand eines Zahns vor einer konstruktiven Veränderung;
- Fig. 8b: die den Zustand eines Zahns nach einer konstruktiven Veränderung;
- Fig. 9a: die 3-dimensionale Darstellung eines Zahns;
- Fig. 9b: die 3-dimensionale Darstellung des Zahns aus 9a in gedrehter Darstellung;
- Fig. 10: ein Zahnmodell, just in time produziert auf Basis ideal gestalteter einzelner Zähne.

### Ausführungsbeispiel

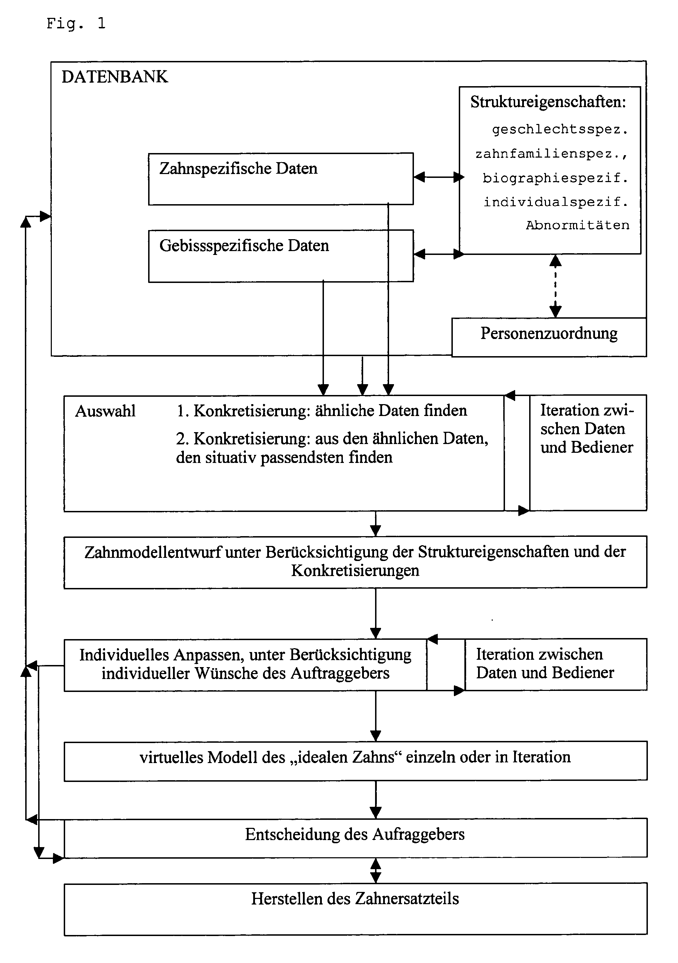

Im einzelnen zeigt die Fig. 1 einen möglichen Gesamtablauf eines auf einer Zahndatenbank aufgebauten Ablaufs. Die Datenbank selbst enthält insbesondere digitalisierte, wie beispielsweise binär codierte Abbildungen real existierender Zähne mit zahn- und/oder gebissspezifische Daten von der Art, die als strukturelle Merkmale zwangsläufig und untrennbar jedem individuellen Zahn und/oder Gebiß anhaften. Hierunter fallen insbesondere geschlechtsspezifischeund/oder zahnfamilienspezifische und/oder biographiespezifische und/oder individualspezifische Kennzeichen mit/ohne Abnormitäten. Eine Zuordnung der Daten zu Personen kann wahlweise erfolgen. Diese Daten dienen neben EDV-typischen Kennzeichen wie Speicherort o.ä. der Charakterisierung und damit letztendlich der Identifizierung eines jeden Einzelzahns. In einem ersten Konkretisierungsschritt kann der Bediener oder, soweit in der Bedienung der Datenbank ausgebildet, der Auftraggeber mit seinen Wünschen an die Datenbank herantreten und basierend auf diesen Wünschen eine Datenauswahl treffen. Ein möglicher Wunsch könnte beispielsweise lauten, typische Zahnmodelle, auch bezeichnet als "Repräsentanten" für einen 45 jährigen männlichen Asiaten aus dem Raum Tokio, der sich bisher in erster Linie von Fischprodukten ernährt hat und keine Abnormitäten aufweist. Die Verfeinerungstiefe der Sortierung kann mit Hilfe von hier nicht dargestellten beliebig fein einstellbaren Filtern mit Softwareunterstützung erfolgen, bis eine repräsentative Anzahl Datensätze gewonnen wurde. Als Filter kommen beispielsweise die Kriterien geschlechtsspezifisch und/oder zahnfamilienspezifisch und/oder biographiespezifischund/oder individualspezifisch mit/ohne der Anzahl der Höcker, mit/ohne Kennzahlen der Äquatorlinie, mit/ohne spezieller Fissurenform (H-Form, bzw. länglich), mit/ohne Randleiste bzw. mit U/V-Form eines Unterkieferzahns bzw. einer Oval- Dreiecks- oder Quadratform eines Oberkieferzahns, mit/ohne eines ggf. vorhandenen Präparationsrands, ggf. Abrasionsstadium aufgrund der Ernährungsweise (z.B. durch Fisch-, Getreide oder Fleisch) und mit/ohne diverse abnorme Kennzeichen o.ä. in Frage.

Unter Umgehung dieses ersten Konkretisierungsschritts oder auf Basis der aus dem ersten Konkretisierungsschritt resultierenden Anzahl Repräsentanten kann dann in einem (zweiten) Konkretisierungsschritt den individuellen Wünschen folgend in einem iterativen Prozeß zwischen Bediener und Datenbank ein einzelnes Exemplar individuell ausgewählt werden. Alternativ ist auch ein Verknüpfen einer Gruppe von Zahndaten real existierender Zähne mit Hilfe von Software denkbar, wodurch ein neuer virtueller Satz Zahndaten auf der Basis bestehender Zahndaten synthetisiert wird, der als Mittelwert von Daten real existierender Zähne dann selbst jedoch keinem real existierenden Zahn mehr entspricht.

Nach der Auswahl eines geeignet erscheinenden Datensatzes wird auf dessen Basis ein Entwurf des so gewonnenen Daten als objektiv idealer Zahn auf einem EDV-Ausgabemedium zur Information als Zahnmodell dargestellt.

Auf dieser Informationsbasis kann dann der Benutzer/Bediener entweder das dargestellte Modell produzieren oder selbst mit Hilfe von Softwaremitteln, wie CAD-Tools, einzelne Aspekte am Zahnmodell in einem iterativen Prozeß mit der Datenbank optimieren und den objektiv idealen Zahn so zu einem subjektiv idealen Zahn weiterentwickeln. Hierbei gilt, dass die dentalspezifischen Konstruktionslinien vom CAD-System anhand des vorhandenen 3D-Datensatzes vorgeschlagen werden können und unter Berücksichtigung dentalspezifischer Problemstellungen von Hand noch angepasst werden können. Dies gilt auch für dentalspezifische Merkmale, wie z.B. für die Positionen der Höckerspitzen. Das Ergebnis kann wiederum mit den Daten der Datenbank abgleichen um dort einen geeigneteren Datensatz herauszufiltern, der dann als dann neuer objektiv idealer Zahn anzusehen wäre, oder um den selbst erstellten Datensatz der Datenbank für weitere Bediener zur Verfügung zu stellen.

In diesem Zusammenhang ist auch denkbar, den objektiv bzw. subjektiv idealen Zahn virtuell in eine Gebissumgebung einzusetzen und seine Interaktion und Passung mit der dann gegebenen Umgebung zu erkennen und zu testen.

In diesem Stadium hat der Benutzer dann alle Informationen, um eine Entscheidung zu treffen, ob er eine konkrete Diagnose einleiten möchte. Er kann außerdem mit Hilfe der bisher gewonnenen Informationen einen Arzt aufsuchen, der für die aktuelle Fragestellung besonders qualifiziert ist und seinen Arbeitsablauf und das Arbeitsergebnis kontrollieren.

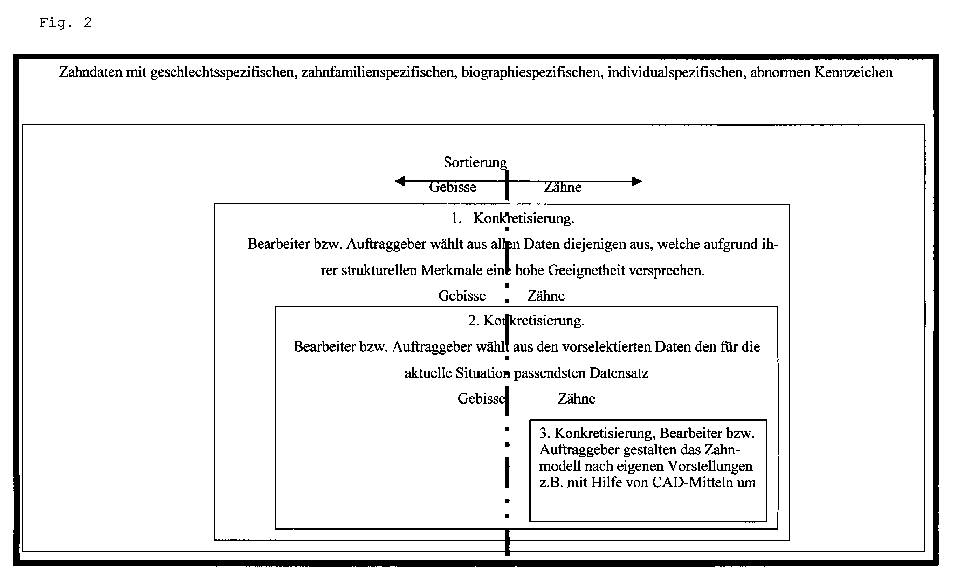

Fig. 2 zeigt die schrittweise Verfeinerung der Gestaltung bis zum angezielten Zahnmodell mit Hilfe von Konkretisierungsstufen. Ausgehend von der Datenbank mit Zahndaten mit geschlechtsspezifischen, zahnfamilienspezifischen, biographiespezifischen, individualspezifischen, abnormen Kennzeichen erfolgt zunächst eine Sortierung in Gebissdaten und Zahndaten. In einer ersten Konkretisierung wählt der Bearbeiter bzw. Auftraggeber aus allen Daten diejenigen aus, welche aufgrund ihrer strukturellen Merkmale eine hohe Geeignetheit versprechen. In einer zweiten Konkretisierung wählt der Bearbeiter bzw. Auftraggeber aus den vorselektierten Daten den für die aktuelle Situation passendsten Datensatz. In einer dritten Konkretisierung gestalten der Bearbeiter bzw. Auftraggeber das Zahnmodell nach eigenen Vorstellungen z.B. mit Hilfe von CAD-Mitteln um.. Unabhängig von dieser Darstellung kann der Bediener natürlich auch direkt in die Datenbank eingreifen und einzelne Datensätze herausholen, was in Fig. 2 nicht dargestellt ist.

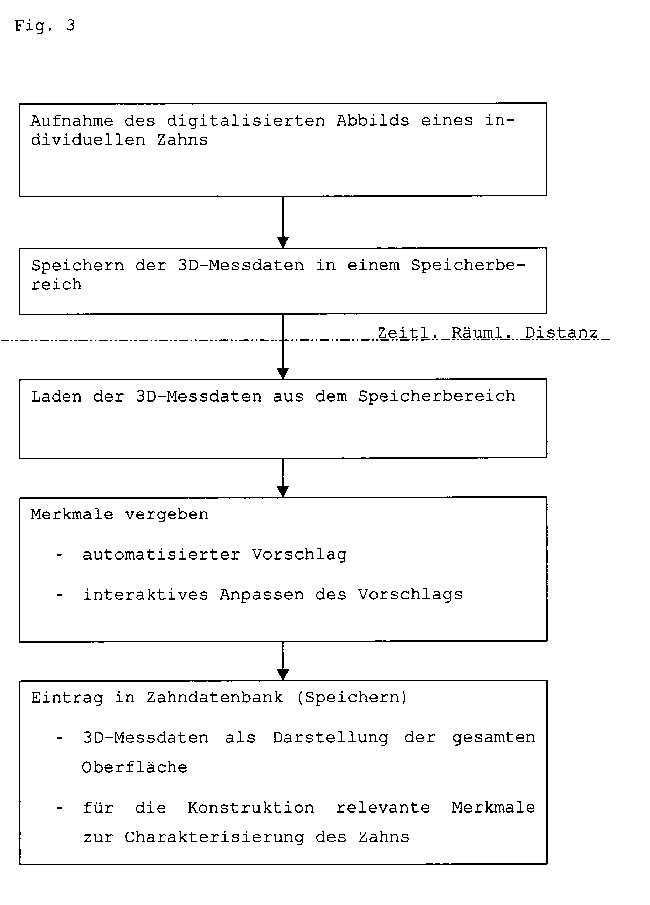

Fig. 3 zeigt den zeitlichen Ablauf ab der Aufnahme eines binären Abbilds eines individuellen realen Zahns in die Datenbank und die mögliche Verwendung dieser Daten. Nach dem Speichern der 3D-Messdaten in einem Speicherbereich kann eine unbestimmte Zeit vergehen, während der die Daten nicht benötigt werden. Eine betroffene Person kann zu einem beliebig späteren Zeitpunkt und von einem beliebig anderen Ort diese Daten bei Bedarf anfordern und ggf. aus der Ferne als 3D-Messdaten aus dem Speicherbereich laden und ihnen zusätzliche Informationen z.B. als automatisierter Vorschlag oder interaktives Anpassen des Vorschlags, zuordnen. In die Zahndatenbank werden 3D-Messdaten als Darstellung der gesamten Oberfläche und/oder für die Konstruktion relevante Merkmale zur Charakterisierung des Zahns gespeichert.

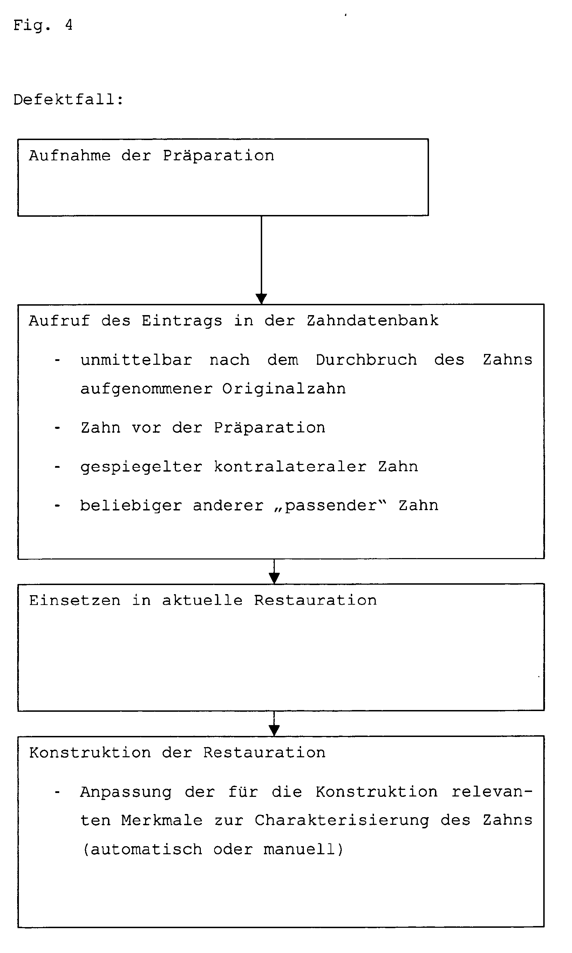

Fig. 4 zeigt den zeitlichen Ablauf ab der Entnahme eines binären Abbilds eines individuellen realen Zahns aus der Datenbank. In einem solchen Fall kommen Daten in Frage, die vom selben Zahn unmittelbar nach dessen Durchbruch stammen, oder die vom Zustand vor einer Präparation stammen oder die einen gespiegelten kontralateralen Zahn oder einen beliebigen anderen "passenden" Zahn repräsentieren. Diese Daten können dann in eine aktuelle Restauration eingesetzt werden. Notwendigenfalls können Anpassungen von für die Konstruktion relevanten Merkmalen zur Charakterisierung des Zahns automatisch oder manuell vorgenommen werden.

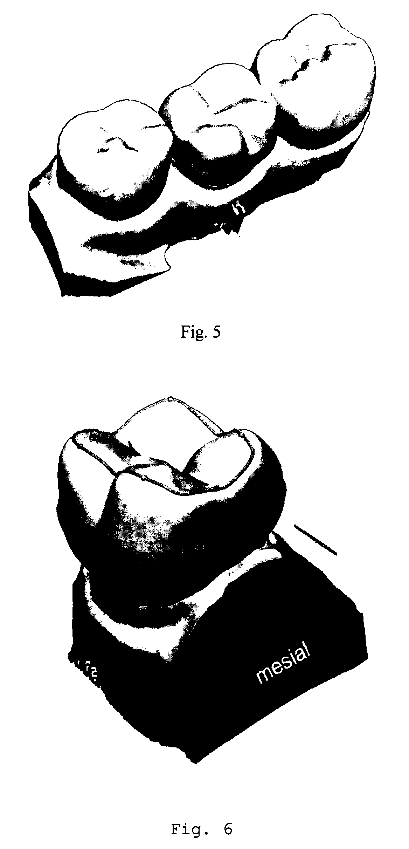

Fig. 5 zeigt mehrere Zähne einer Zahnfamilie in einer Kaufläche und deren Passung zueinander. Derart in eine Umgebung eingepasste Zahnmodelle können insbesondere, wenn sie nachträglich verändert wurden, in ihrer Wirkung und Passung mit ihrer Umgebung dargestellt und überprüft werden.

Fig. 6 zeigt einen Zahn in einer Ansicht mesial/von oben mit der Okklusalfläche als ausgewählten Bereich. In dieser Fläche sind mögliche Konstruktionslinien dargestellt, welche gemeinsam mit den Daten eines Zahns abgespeichert werden können. Mit Hilfe dieser Konstruktionslinien kann ein Zahn sowohl bestimmt, als auch, soweit er als objektiv idealer Zahn vorhanden ist, subjektiv verändert werden. Hierfür eignen sich insbesondere die charakteristischen Konstruktionslinien, Äquatorlinie, Randleiste und ggf. Präparationsrand.

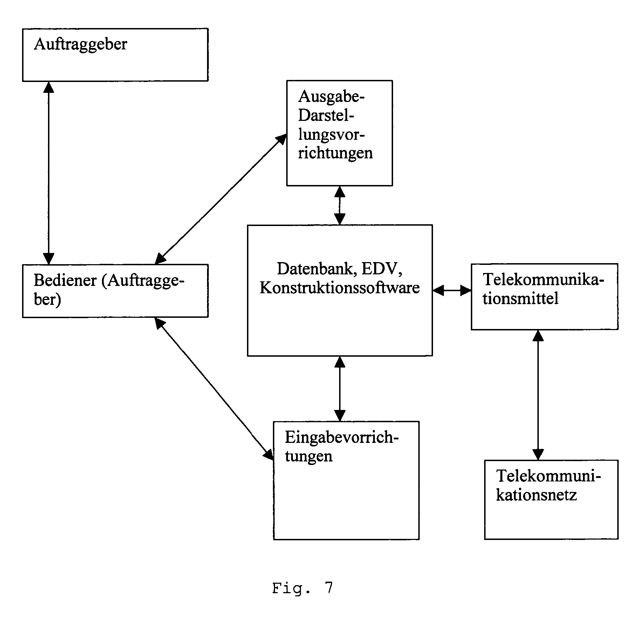

In Fig. 7 ist der prinzipiellen Aufbau der Interaktion mit der Datenbank dargestellt. Die gesamte Vorrichtung umfasst neben der Datenbank und den betreffenden Ein-Ausgabenmitteln auch eine Konstruktionssoftware zur individuellen Gestaltung von Zahnmodellen. Der in Verbindung mit dem Auftraggeber stehenden Bediener interagiert mit den Ausgabe- Darstellungs- und Eingabevorrichtungen mit der Datenbank bzw. der EDV bzw. der sie umfassenden Software. Die Datenbank kann mit Hilfe von Telekommunikationsmitteln an das Telekommunikationsnetz angeschlossen sein und von dort Daten beziehen, bzw. nach dort bereitstellen.

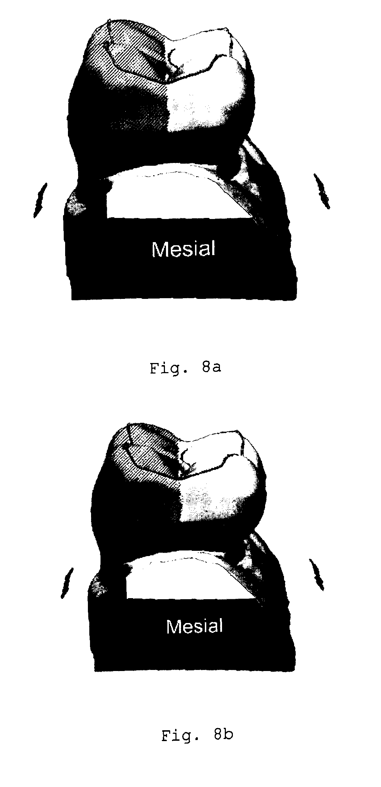

Fig. 8a zeigt den Zustand eines Zahns vor einer konstruktiven Veränderung seiner rechten Außenfläche an, wobei Fig. 8b den selben Zahn nach einer konstruktiven Veränderung seiner rechten Außenfläche anzeigt, wobei die Ausbuchtung jener Fläche stärker ausgeprägt wurde.

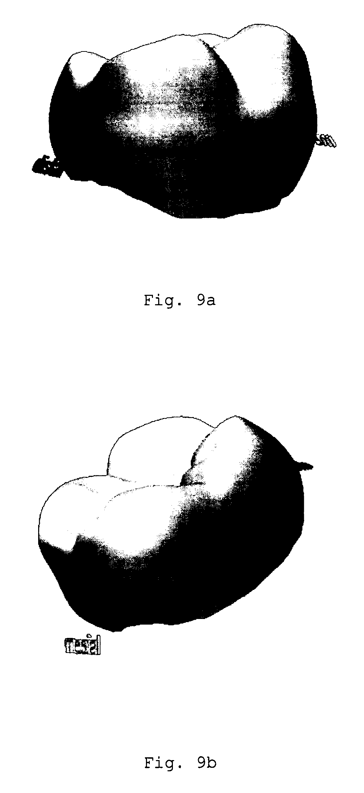

Fig. 9a und Fig. 9b zeigen die 3-dimensionale Darstellung des selben Zahnmodells in einer jeweils anderen gedrehten Form. Auf diesem Wege kann das Zahnmodell von allen Seiten betrachtet werden.

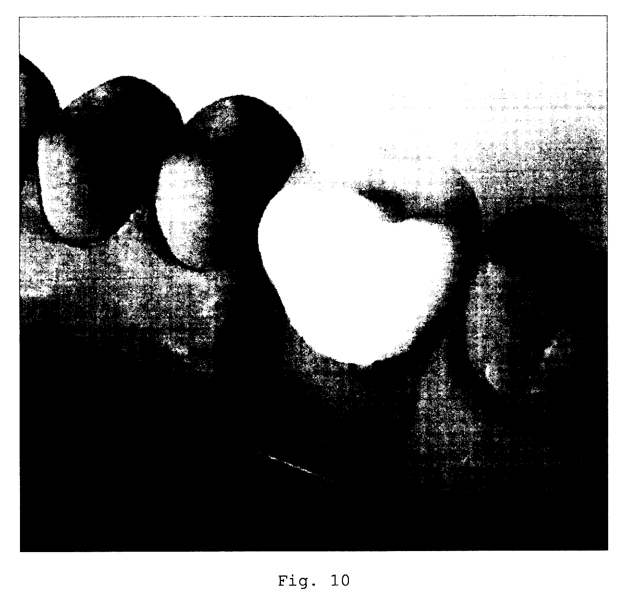

Fig. 10 zeigt ein, just in time produziertes reales Zahnmodell, welches auf Basis eines idealen Zahnmodells entwickelt wurde und an seine Umgebung angepaßt wurde.

## Patentansprüche

1. Datenbank zur Speicherung von Daten, wobei die Datenbank Zahndaten mit allgemeingültige gebissspezifischen und/oder allgemeingültige zahnspezifischen Merkmalen umfaßt, **dadurch gekennzeichnet, dass** die Zahndaten real existierende Zähne in digitalisierter Form abbilden und diese digitalisierte Form auch allgemeingültige gebissspezifische bzw. zahnspezifische Merkmale bzw. strukturelle Eigenschaften, wie geschlechtsspezifischeund/oder zahnfamilienspezifische- und/oder biographiespezifische- und/oder individualspezifische- mit/ohne abnorme Kennzeichen umfasst.

2. Datenbank nach Anspruch 1, **dadurch gekennzeichnet, dass** die Zahndaten einer konkreten Person zugeordnet sind.

3. Datenbank nach Anspruch 1 und 2, **dadurch gekennzeichnet, dass** die gebissspezifische Struktur Daten umfasst, die die Anzahl, Position, Charakter, Abnormitäten sowohl von Zahntypen als auch von deren Zusammenwirken repräsentieren.

4. Datenbank nach Anspruch 1 bis 3, **dadurch gekennzeichnet, dass** eine konkretisierte gebissspezifische Struktur aus einer beliebigen Anzahl individueller gebissspezifischer Strukturen von einzelnen Gebissen ermittelt wurde.

5. Datenbank nach Anspruch 1 bis 4, **dadurch gekennzeichnet, dass** eine individualisierte konkretisierte gebissspezifische Struktur aus einer beliebigen Anzahl individueller gebissspezifischer Strukturen von einzelnen Gebissen ermittelt wurde.

6. Datenbank nach Anspruch 1 bis 5, **dadurch gekennzeichnet, dass** die zahnspezifische Struktur aus Daten besteht, die die Position, Gestalt, Charakter, Abnormitäten eines Einzelzahns, an einer beliebigen Position im Gebiss repräsentieren.

7. Datenbank nach Anspruch 1 bis 6, **dadurch gekennzeichnet, dass** eine konkretisierte zahnspezifische Struktur aus einer beliebigen Anzahl individueller zahnspezifischer Strukturen von einzelnen an der selben Stelle im Gebiß befindlichen Zähnen ermittelt wurde.

8. Datenbank nach Anspruch 1 bis 7, **dadurch gekennzeichnet, dass** eine individualisierte konkretisierte zahnspezifische Struktur aus einer beliebigen Anzahl individueller zahnspezifischer Strukturen von einzelnen an der selben Stelle im Gebiß befindlichen Zähnen ermittelt wurde.

9. Datenbank nach einem der Ansprüche 1 bis 8, **dadurch gekennzeichnet, dass** in der/den Datenbank/en Daten zusätzlich auf die gebissspezifische und/oder zahnspezifische Struktur bezogene dentalspezifische Konstruktionsmerkmale abgespeichert werden.

10. Datenbank nach Anspruch 1 bis 9 **dadurch gekennzeichnet, dass** sich die Datenbank/en direkt am Einsatzort befindet, oder für den Fall, daß die Datenbank/en nicht direkt am Einsatzort ist/sind, sich an einem beliebigen Ort auf der Welt befinden kann und mit Hilfe von Telekommunikationsmitteln angeschlossen wird.

11. Datenbank nach Anspruch 1 bis 10 **dadurch gekennzeichnet, dass** die Datenbank mit einer oder mehreren Eingabeeinheiten und/oder einer oder mehreren Wiedergabeeinheiten ausgestattet ist.

12. Datenbank nach Anspruch 1 bis 11 **dadurch gekennzeichnet, dass** die Eingabeeinheiten Tastatur und eine Anzeigevorrichtung und/oder einen Bildschirm umfasst.

13. Datenbank nach Anspruch 1 bis 12 **dadurch gekennzeichnet, dass** der Auftraggeber und / oder der Bediener mit Hilfe der Eingabe- und Darstellungseinheit/en auf die Datenbank/en zugreift und aus ihr/ihnen Daten abruft, die an der/den Darstellungseinheit/en wiedergegeben werden.

14. Datenbank nach Anspruch 1 bis 13 **dadurch gekennzeichnet, dass** die Interaktion zwischen Eingabeeinheit/en, Darstellungseinheit/en und Datenbank/en von mindestens einem Computerprogramm unterstützt werden.

15. Datenbank nach Anspruch 1 bis 14 **dadurch gekennzeichnet, dass** der Austausch von Daten zwischen den Bedien- bzw. Darstellungsterminals nur mit Hilfe eines Bezahlsystems möglich ist.

16. Datenbank nach Anspruch 1 bis 15 **dadurch gekennzeichnet, dass** das Computerprogramm aus ausgewählten Datensätzen einen einzigen neuen Datensatz synthetisiert.

17. Datenbank nach Anspruch 1 bis 16, **dadurch gekennzeichnet, dass** die Daten der Datenbank zum Aufbau eines Zahnmodells dienen.

18. Zahnmodell, dessen äußere/innere Oberfläche und/oder innerer Aufbau mit Hilfe von Daten bestimmt ist und an einem Ausgabegerät dargestellt wird, **dadurch gekennzeichnet, dass** die hierfür verwendeten Daten aus einer Datenbank entnommen sind und dass die Daten angepasst sind.

19. Zahnmodell nach Anspruch 18, **dadurch gekennzeichnet, dass** die Daten geschlechtsspezifische und/oder zahnfamilienspezifische und/oder biographiespezifische und/oder individuenspezifische mit/ohne abnorme Besonderheiten umfassen.

20. Zahnmodell nach einem der oben genannten Ansprüche, **dadurch gekennzeichnet, dass** die Daten als digitale Daten vorliegen und dass das Zahnmodell in einer 3-D Darstellung darstellbar ist.

21. Zahnmodell nach einem der vorgenannten Ansprüche, **dadurch gekennzeichnet, dass** das Zahnmodell eine Gruppe von Zähnen umfasst.

22. Zahnmodell nach einem der oben genannten Ansprüche, **dadurch gekennzeichnet, dass** es eine eine, oder eine mehrere Zähne umfassende Kaufläche umfasst.

23. Zahnmodell nach einem der oben genannten Ansprüche, **dadurch gekennzeichnet, dass** die Daten der beim Kauen gegenüberliegenden Zähne berücksichtigt sind.

24. Zahnmodell nach einem der obigen Ansprüche, **dadurch gekennzeichnet, dass** das Zahnmodell mit Hilfe einer Zahndatenbank aufgebaut wurde und mit Hilfe von Softwareunterstützung individualisiert werden kann.

25. Zahnmodell nach einem der obigen Ansprüche, **dadurch gekennzeichnet, dass** das Zahnmodell mit Hilfe der Zahndatenbank aufgebaut wurde und nach den Vorstellungen einer Person interaktiv individualisiert werden kann.

26. Verfahren zur Konzeption eines Zahnmodells dessen äußere Gestalt und/oder innerer Aufbau mit Hilfe von Daten ausgestaltet und/oder aufgebaut ist, die geschlechtsspezifisch und/oder zahnfamilienspezifisch und/oder biographiespezifisch und/oder individuenspezifisch mit oder ohne abnorme Kennzeichen sind, **dadurch gekennzeichnet, dass** der Bediener und/oder der Auftraggeber mit Hilfe eines elektronischen Datenverarbeitungssystems
- auf Datenbank/en zugreift,
- diese Daten auf einer Darstellungsvorrichtung zu einem Bild eines Zahnmodells zusammengefügt werden und
- mit Hilfe dieses Bilds eines Zahnmodells Hilfe der Ein- und Ausgabevorrichtungen der elektronischen Datenverarbeitung dessen dargestellte Gestalt veränderbar ist

27. Verfahren nach Anspruch 26, **dadurch gekennzeichnet, dass** das Bild des Zahns in seinen drei Dimensionen dargestellt ist bearbeitet werden kann.

28. Verfahren nach Anspruch 27 und 28, **dadurch gekennzeichnet, dass** das dargestellte Bild sofort als drei dimensionales Modell hergestellt wird.

29. Datenbank nach einem der obigen Ansprüche, **dadurch gekennzeichnet, dass** der an der Darstellungseinheit/en dargestellten Körper ein Zahnmodell eines zahnmedizinischen Passkörpers ist, der mit einer aktuell geplanten oder bestehenden Behandlungssituation korrespondiert.

30. Zahnersatzteil, nach einem der vorergehenden Ansprüche, **dadurch gekennzeichnet, daß** es unter Verwendung eines Zahnmodells und/oder einer Zahndatenbank gestaltet wurde und direkt produziert wird.
